# EUROPEAN PATENT APPLICATION

(11) **EP 3 296 853 A1**
(43) Date of publication of application: **21.03.2018**
(21) Application number: 17157246.4
(22) Date of filing: 21.02.2017
(51) Int. Cl.: G06F 3/0488

(54) **MOBILE TERMINAL AND METHOD FOR CONTROLLING THE SAME**

(30) Priority: 19.09.2016 KR 20160119296
(71) Applicant: LG ELECTRONICS INC., Yeongdeungpo-gu Seoul, 07336 (KR)
(72) Inventor: JEONG, Byoungzoo, 06772 SEOUL (KR); LEE, Juhyun, 06772 SEOUL (KR); KIM, Sanga, 06772 SEOUL (KR)
(74) Representative: Cabinet Plasseraud

(57) **Abstract**

The present invention relates to a display device controlling contents outputted on a display unit by a touch input inputted by both hands and a method of controlling therefor.

In order to achieve the aforementioned object and a different object, according to one embodiment of the present invention, a display device includes a display unit, a sensing unit, and a controller, the controller configured to sense a plurality of touch inputs in a state that contents are outputted on the display unit, wherein a plurality of the touch inputs includes a first touch input and a second touch input, the controller configured to extract a first function corresponding to the first touch input and a second function corresponding to the second touch input, the controller configured to control the contents according to a third function based on a combination of the first function and the second function.

## Description

### BACKGROUND OF THE INVENTION

### Field of the Invention

The present invention relates to a display device controlling contents outputted on a display unit by a touch input inputted by both hands and a method of controlling therefor.

### Discussion of the Related Art

A mobile terminal is a device which may be configured to perform various functions. Examples of such functions include data and voice communications, capturing images and video via a camera, recording audio, playing music files and outputting music via a speaker system, and displaying images and video on a display. Some terminals include additional functionality which supports game playing, while other terminals are also configured as multimedia players. More recently, mobile terminals have been configured to receive broadcast and multicast signals which permit viewing of contents, such as videos and television programs.

Generally, terminals can be classified into mobile terminals and stationary terminals according to a presence or non-presence of mobility. And, the mobile terminals can be further classified into handheld terminals and vehicle mount terminals according to availability for hand-carry.

There are ongoing efforts to support and increase the functionality of mobile terminals. Such efforts include software and hardware improvements, as well as changes and improvements in the structural components which form the mobile terminal.

Contents of such a display device on which a display unit is mounted as a mobile terminal can be controlled by various touch inputs. In this case, if the display device is equipped with a small display unit, the display device can be controlled by a touch input of one hand. On the other hand, if the display unit is big like a digital signage, it is necessary for a user to control the display unit by a touch input inputted by both hands. And, in case of a large display, it is necessary for a plurality of users to put a touch input on the display at the same time to implement an independent function.

### SUMMARY OF THE INVENTION

Accordingly, the present invention is directed to an apparatus and method thereof that substantially obviate one or more problems due to limitations and disadvantages of the related art. An object of the present invention is to provide a display device capable of controlling contents via multi-touch inputted by both hands and a method of controlling therefor.

Another object of the present invention is to provide a display device providing a new function of which functions corresponding to each of a plurality of touch inputs are combined and a method of controlling therefor.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, according to one embodiment, a display device includes a display unit, a sensing unit, and a controller, the controller configured to sense a plurality of touch inputs inputted on the display unit in a state that contents are outputted, wherein a plurality of the touch inputs include a first touch input and a second touch input, the controller configured to extract a first function corresponding to the first touch input and a second function corresponding to the second touch input, the controller configured to control the contents according to a third function based on a combination of the first function and the second function.

In another aspect of the present invention, each of the first touch input and the second touch input may correspond to an input performed by a different hand.

In another aspect of the present invention, a plurality of the touch inputs include a direct touch touched on the display unit and a proximity touch vertically located within a predetermined distance range from the display unit.

In another aspect of the present invention, when a recently used list is outputted on the display unit, the controller is further configured to sense the first touch input inputted on a first application and the second touch input inputted on a second application and output a multitasking screen including a first area and a second area on the display unit in response to the first touch input and the second touch input. In this case, an execution screen of the first application is outputted on the first area of the multitasking screen and an execution screen of the second application can be outputted on the second area of the multitasking screen.

In another aspect of the present invention, when a plurality of thumbnail images are outputted on the display unit, the controller is further configured to sense the first touch input inputted on a first thumbnail and the second touch input inputted on a second thumbnail and select a plurality of thumbnails between the first thumbnail and the second thumbnail in response to the first touch input and the second touch input.

In another aspect of the present invention, when an image is outputted on the display unit, the controller is further configured to sense the first touch input for selecting a first area included in the image and the second touch input for selecting an area except the first area from the image and output a magnified image of the first area on the display unit in response to the first touch input and the second touch input.

In another aspect of the present invention, when an image is outputted on the display unit, the controller is further configured to sense the first touch input inputted on the image and a second touch input inputted on a specific area of the image and output a magnified pop-up of the first area on the image in a manner of overlaying the pop-up on the image.

In another aspect of the present invention, when an image is outputted on the display unit, the controller is further configured to sense the first touch input inputted on a first area included in the image and the second touch input inputted on a second area included in the image, wherein the first touch input and the second touch input correspond to drag touch inputs, and divide the image into a first image and a second image in response to the first touch input and the second touch input.

In another aspect of the present invention, if moving lengths of the first touch input and the second touch input are within a predetermined length range, the controller is further configured to output a division indicator on the display unit. If at least one of the first touch input and the second touch input does not belong to the predetermined length range, the controller is further configured to divide the image into the first image and the second image.

In another aspect of the present invention, when a plurality of items are outputted on the display unit, the controller is further configured to sense a first touch input and a second touch input inputted on a first item among a plurality of the items and output a lower item of the first item in a pop-up form in response to the first touch input and the second touch input.

In another aspect of the present invention, if at least one of the first touch input and the second touch input is released, the controller is further configured to remove the outputted pop-up from the display unit and output a plurality of the items.

In another aspect of the present invention, the display device further includes a stylus pen and a wireless communication unit configured to transmit and receive data. In this case, when a calendar is outputted on the display unit, the controller is further configured to sense the first touch input and a second touch input inputted on a specific date by the stylus pen and output a magnified pop-up corresponding to the specific date at which the second touch input is sensed in response to the first touch input and the second touch input.

In another aspect of the present invention, when a lock screen is outputted on the display unit, the controller is further configured to sense a first touch input and a second touch input. In this case, the lock screen includes a pattern code area and the first touch input and the second touch input correspond to drag touch inputs. If a pattern input generated by the first touch input and the second touch input corresponds to a predetermined pattern input, the controller is further configured to unlock the lock screen.

In another aspect of the present invention, a method of controlling a display device includes the steps of sensing a plurality of touch inputs in a state that contents are outputted on a display unit, wherein a plurality of the touch inputs include a first touch input and a second touch input, extracting a first function corresponding to the first touch input and a second function corresponding to the second touch input, and controlling the contents according to a third function based on a combination of the first function and the second function.

It is to be understood that both the foregoing general description and the following detailed description of the preferred embodiments of the present invention are exemplary and explanatory and are intended to provide further explanation of the invention as claimed.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1A is a block diagram of a mobile terminal in accordance with the present disclosure;
FIGS. 1B and 1C are conceptual views of one example of the mobile terminal, viewed from different directions;
FIG. 2 is a block diagram for a mobile terminal according to one embodiment of the present invention;
FIG. 3 is a diagram for an example of multi-touch inputted by one hand of both hands on a mobile terminal according to one embodiment of the present invention;
FIG. 4 is a diagram for an example of various multi-touch inputs sensed on a mobile terminal according to one embodiment of the present invention;
FIG. 5 is a diagram for an example of a user interface controlled by a multi swipe touch sensed on a mobile terminal according to one embodiment of the present invention;
FIG. 6 is a diagram for a different example of a user interface controlled by a multi swipe touch sensed on a mobile terminal according to one embodiment of the present invention;
FIG. 7 is a diagram for an example of a user interface controlled by air zoom sensed on a mobile terminal according to one embodiment of the present invention;
FIG. 8 is a diagram for an example of a user interface controlled by an air view sensed on a mobile terminal according to one embodiment of the present invention;
FIG. 9 is a diagram for an example of a user interface controlled by a cross pinch sensed on a mobile terminal according to one embodiment of the present invention;
FIG. 10 is a diagram for a different example of a user interface controlled by a cross pinch sensed on a mobile terminal according to one embodiment of the present invention;
FIG. 11 is a diagram for a further different example of a user interface controlled by a cross pinch sensed on a mobile terminal according to one embodiment of the present invention;
FIG. 12 is a diagram for a further different example of a user interface controlled by a cross pinch sensed on a mobile terminal according to one embodiment of the present invention;
FIG. 13 is a diagram for an example of a user interface controlled by a cross hover sensed on a mobile terminal according to one embodiment of the present invention;
FIG. 14 is a diagram for an example of a user interface controlled by pinch and drawing sensed on a mobile terminal according to one embodiment of the present invention;
FIG. 15 is a flowchart for a method of controlling a display device according to one embodiment of the present invention.

### DETAILED DESCRIPTION OF THE INVENTION

Description will now be given in detail according to exemplary embodiments disclosed herein, with reference to the accompanying drawings. For the sake of brief description with reference to the drawings, the same components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

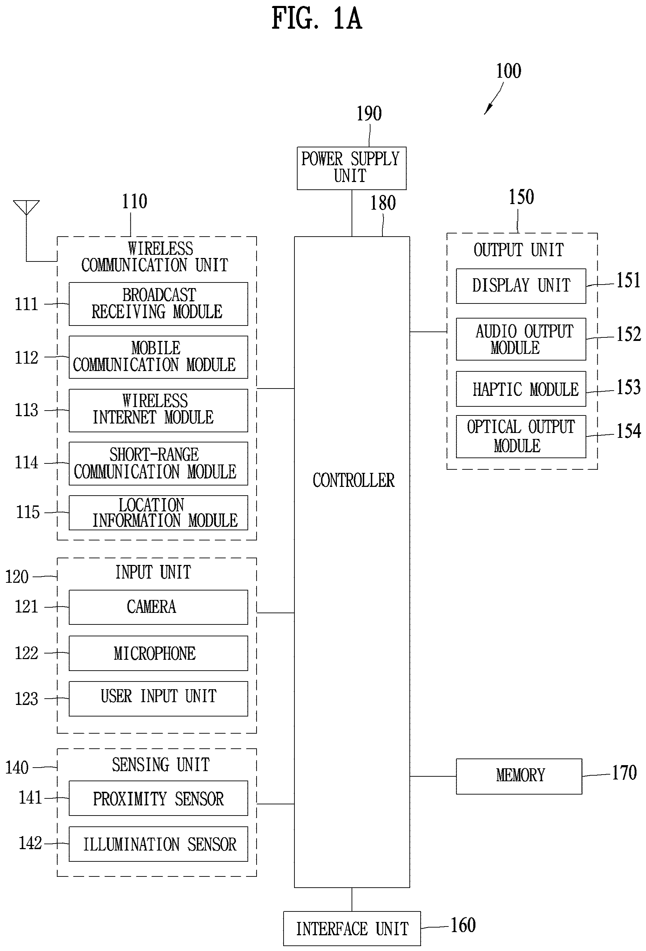

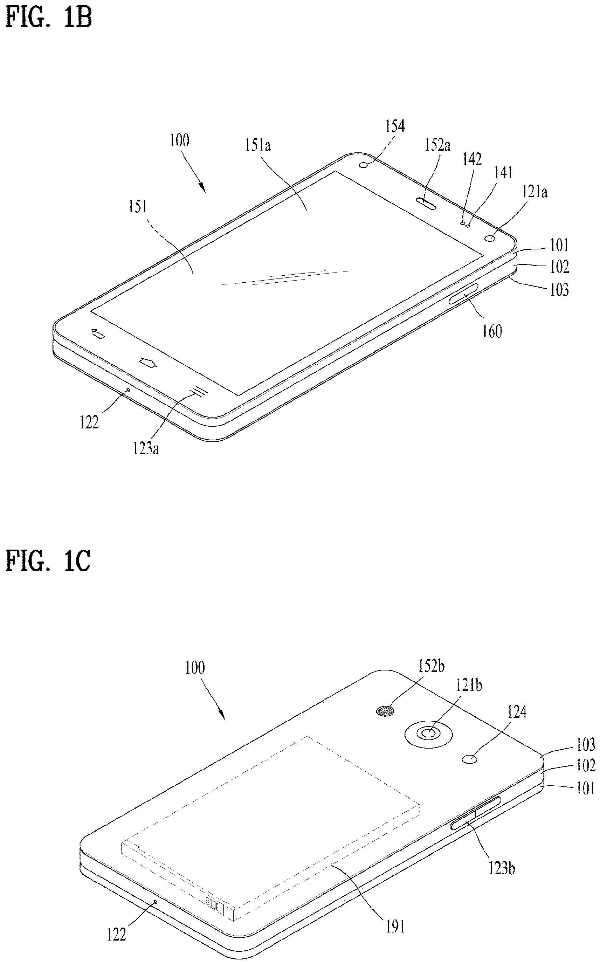

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented. Referring now to FIG. 1A, the mobile terminal 100 is shown having wireless communication unit 110 configured with several commonly implemented components.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks.

To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142. If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 can provide or process information or a function appropriate for a user in a manner of processing a signal, data, information and the like inputted or outputted via the aforementioned configuration elements or executing an application program stored in the memory 170.

The controller 180 may provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least a part of the configuration elements can operate in a manner of cooperating with each other to implement an operation of a mobile terminal, control of the mobile terminal or a method of controlling the mobile terminal according to various embodiments described in the following. And, the operation of the mobile terminal, the control of the mobile terminal or the method of controlling the mobile terminal can be implemented on the mobile terminal by driving at least one or more application programs stored in the memory 170.

Referring still to FIG. 1A, various components depicted in this figure will now be described in more detail.

Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The broadcast managing entity may be implemented using a server or system which generates and transmits a broadcast signal and/or broadcast associated information, or a server which receives a pre-generated broadcast signal and/or broadcast associated information, and sends such items to the mobile terminal. The broadcast signal may be implemented using any of a TV broadcast signal, a radio broadcast signal, a data broadcast signal, and combinations thereof, among others. The broadcast signal in some cases may further include a data broadcast signal combined with a TV or radio broadcast signal.

The broadcast signal may be encoded according to any of a variety of technical standards or broadcasting methods (for example, International Organization for Standardization (ISO), International Electrotechnical Commission (IEC), Digital Video Broadcast (DVB), Advanced Television Systems Committee (ATSC), and the like) for transmission and reception of digital broadcast signals. The broadcast receiving module 111 can receive the digital broadcast signals using a method appropriate for the transmission method utilized.

Examples of broadcast associated information may include information associated with a broadcast channel, a broadcast program, a broadcast event, a broadcast service provider, or the like. The broadcast associated information may also be provided via a mobile communication network, and in this case, received by the mobile communication module 112.

The broadcast associated information may be implemented in various formats. For instance, broadcast associated information may include an Electronic Program Guide (EPG) of Digital Multimedia Broadcasting (DMB), an Electronic Service Guide (ESG) of Digital Video Broadcast-Handheld (DVB-H), and the like. Broadcast signals and/or broadcast associated information received via the broadcast receiving module 111 may be stored in a suitable device, such as a memory 170.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE), LTE-A(Long Term Evolution-Advanced), and the like).

Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal. As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others. As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images.

A typical stereoscopic display unit may employ a stereoscopic display scheme such as a stereoscopic scheme (a glass scheme), an auto-stereoscopic scheme (glassless scheme), a projection scheme (holographic scheme), or the like.

In general, a 3D stereoscopic image may include a left image (e.g., a left eye image) and a right image (e.g., a right eye image). According to how left and right images are combined into a 3D stereoscopic image, a 3D stereoscopic imaging method can be divided into a top-down method in which left and right images are located up and down in a frame, an L-to-R (left-to-right or side by side) method in which left and right images are located left and right in a frame, a checker board method in which fragments of left and right images are located in a tile form, an interlaced method in which left and right images are alternately located by columns or rows, and a time sequential (or frame by frame) method in which left and right images are alternately displayed on a time basis.

Also, as for a 3D thumbnail image, a left image thumbnail and a right image thumbnail can be generated from a left image and a right image of an original image frame, respectively, and then combined to generate a single 3D thumbnail image. In general, the term "thumbnail" may be used to refer to a reduced image or a reduced still image. A generated left image thumbnail and right image thumbnail may be displayed with a horizontal distance difference there between by a depth corresponding to the disparity between the left image and the right image on the screen, thereby providing a stereoscopic space sense.

A left image and a right image required for implementing a 3D stereoscopic image may be displayed on the stereoscopic display unit using a stereoscopic processing unit. The stereoscopic processing unit can receive the 3D image and extract the left image and the right image, or can receive the 2D image and change it into a left image and a right image.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal.

In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal 100 can include the display unit 151, the first and second audio output unit 152a/152b, the proximity sensor 141, the illumination sensor 142, the optical output unit 154, the first and second camera 121a/121b, the first and second operation unit 123a/123b, the microphone 122, the interface unit 160 and the like.

FIGS. 1B and 1C depict certain components as arranged on the mobile terminal.

However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices.

Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151 a, or a metal wire which is patterned directly on the rear surface of the window 151 a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160.

Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

Further preferred embodiments will be described in more detail with reference to additional drawing figures. It is understood by those skilled in the art that the present features can be embodied in several forms without departing from the characteristics thereof.

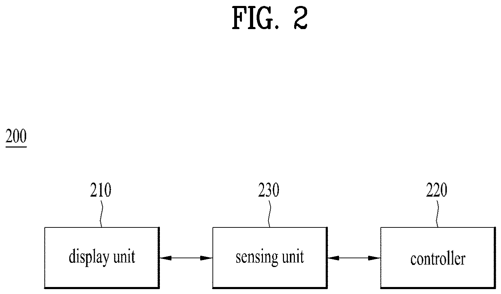

FIG. 2 is a block diagram for a mobile terminal according to one embodiment of the present invention.

According to the present invention, a display device 200 can include a display unit 210, a sensing unit 220, and a controller 230. And, a configuration module installed in the display device is not restricted by the aforementioned modules and may further include various configuration modules.

And, the display device 200 according to one embodiment of the present invention can include various digital devices including a display unit. For example, the display device 200 can include a relatively small display device such as a smartphone and a large display device such as a tablet PC, a digital signage, and the like, by which the present invention may be non-limited.

The display unit 210 can display visual information. In this case, the visual information can include content, an application, an image, a video, an icon, and the like. And, the display unit 210 can display information processed in the display device 200. For example, the display unit 210 basically outputs various images and text information and may be able to display UI (user interface) and GUI (graphic user interface) according to information on an execution screen of an application program executed in the display device 200. And, the display unit 210 can output the visual information on a screen based on a control command of the controller 230.

In the present invention, the display unit 210 can be implemented by the display unit 151 shown in FIG. 1a. In the present invention, the display unit 210 can be installed in a shape of a touch screen together with the sensing unit 220.

The sensing unit 220 senses various inputs of a user inputted on the display device 200 and environment of the display device 200 and delivers a sensed result to the controller 230 to enable the controller 230 to perform an operation according to the sensed result. In the present invention, the sensing unit 220 can be implemented by the sensing unit 140 or the input unit 120 shown in FIG. 1a. According to one embodiment of the present invention, the sensing unit 220 can sense a direct touch and a proximity touch (e.g., hovering) via touch recognition of a capacitive type. For example, the sensing unit 220 can sense a point corresponding to an object vertically located within 5 cm from the display unit.

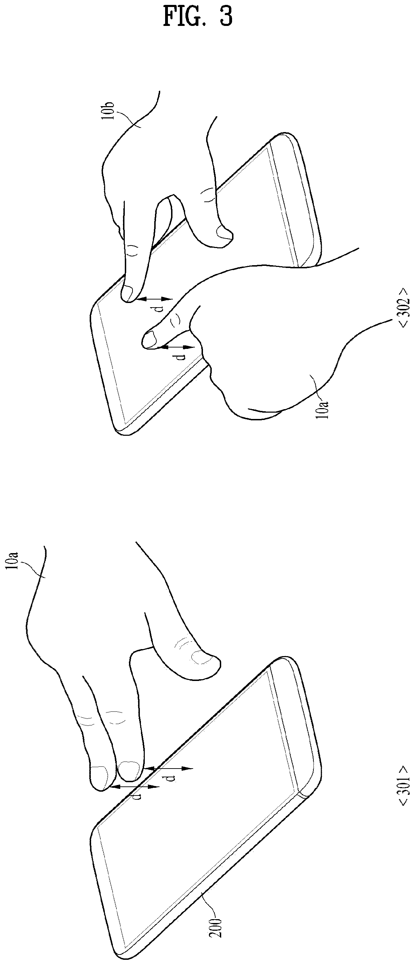

And, in case of sensing a proximity touch and a direct touch, the sensing unit 220 can sense not only a point corresponding to a single input but also points corresponding to a plurality of inputs. When a plurality of inputs are inputted, the sensing unit is able to distinguish multi-touch touched by one hand from multi-touch touched by both hands. Regarding this, it shall be described later with reference to FIG. 3.

According to one embodiment of the present invention, a mobile terminal is equipped with a touch sensor to sense various direct touches including a short touch, a long touch, a drag touch, and the like. In the present invention, assume that a touch input corresponds to a terminology including both the aforementioned direct touch and the proximity touch.

The controller 230 processes data, controls each of units of the display device 200, and controls data transceived between units. In the present invention, the controller 230 can be implemented by the controller 180 shown in FIG. 1a. According to one embodiment of the present invention, the controller 230 detects a plurality of touch points unsynchronized with the display unit and can perform a function based on a plurality of the detected touch points.

Meanwhile, although it is not depicted in FIG. 2, the display device can further include a memory (not depicted). The memory (not depicted) can be implemented by the memory 170 shown in FIG. 1a. The memory can be embedded in the display device or can be installed in the exterior of the display device in a form of cloud, or the like. and, according to one embodiment of the present invention, the memory 170 can store a function corresponding to a touch input. Hence, the display unit can extract a function from the memory (not depicted) and control the function.

In the following, a method for a mobile terminal to provide various user interfaces through a touch point generated by a plurality of unsynchronized touch inputs is explained with reference to embodiments of FIGS. 3 to 15.

FIG. 3 is a diagram for an example of multi-touch inputted by one hand of both hands on a mobile terminal according to one embodiment of the present invention.

In general, in case of using multi touch on a display device, a user performs the multi touch using a plurality of fingers of one hand or using each of a plurality of fingers of both hands. When a finger maintains a specific operation such as hovering on a display device, the finger may have a fine tremor and the fine tremor can be sensed by a capacitive type touch. For example, if a finger is vertically located within a predetermined distance range (d) from a touch screen, the display device can sense a tremor of a hovering touch. For example, the predetermined distance range (d) may correspond to approximately 5 cm.

Meanwhile, a multi touch touched by one hand shown in <301> and a multi touch touched by both hands shown in <302> may have a difference in terms of the extent of a tremor when hovering is performed. For example, the multi touch touched by one hand may have fewer tremors compared to the multi touch touched by both hands. This is because the multi touch touched by one hand has a higher synchronization rate compared to the multi touch touched by both hands. (John Williamson, Fingers of a Hand Oscillate Together: Phase Syncronisation of Tremor in Hover Touch Sensing, Conference of Human Factors in Computing Systemt, 2016-05-07).

In the following, various embodiments for controlling a display device via a multi touch input inputted by both hands using the aforementioned characteristics are explained. In particular, according to the present invention, a display device can distinguish a multi touch input inputted by one hand from a multi touch input inputted by both hands. And, in case of a tremor difference which is sensed at the time of the hovering, since a hovering section is also included in a direct touch before the touch is contacted with a display, assume that it is able to identically apply a difference between a tremor of a multi touch touched by one hand and a tremor of a multi touch touched by both hands.

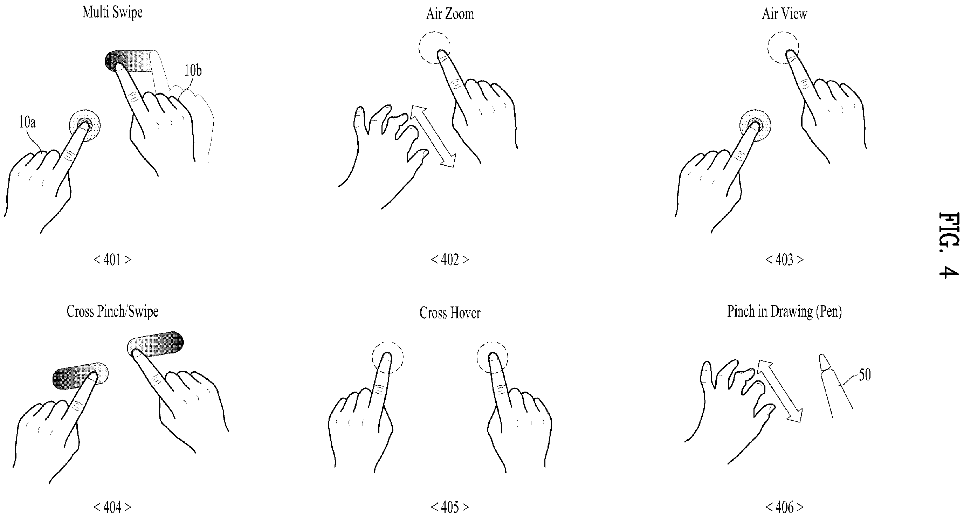

FIG. 4 is a diagram for an example of various multi-touch inputs sensed on a mobile terminal according to one embodiment of the present invention.

As mentioned earlier in FIG. 3, a display device can sense not only a multi touch input inputted by one hand and a multi touch input inputted by both hands. In FIG. 4, assume that the multi touch input inputted by both hands is performed by a first hand 10a and a second hand 10b. And, the first hand 10a and the second hand 10b may belong to an identical user or a different user.

For example, <401> shows a multi swipe. While the first hand 10a holds a touch, the second hand 10b performs a swipe touch or a flicking touch. <402> shows an air zoom. While the first hand 10a performs a pinch-in or pinch-out touch input, the second hand 10b performs a hovering touch. <403> shows an air view. While the first hand 10a holds a touch, the second hand 10b performs a hovering touch.

<404> shows a cross pinch/swipe. A pinch-in touch or a pinch-out touch is performed by the first hand 10a and the second hand 10b. <405> shows a cross hover. A hovering touch is performed by the first hand 10a and the second hand 10b. <406> shows a pinch-in drawing. While the first hand 10a performs a pinch-in or pinch-out touch input, the second hand 10b performs a drag touch through a stylus pen 50.

Meanwhile, the embodiment mentioned earlier in FIG. 4 corresponds to an example of a multi touch input. It may have various multi touches different from the multi touch input shown in FIG. 4. And, the aforementioned embodiment can be performed in a manner of switching the first hand 10a and the second hand 10b with each other. And, in the embodiment of FIG. 4, a display device can extract points corresponding to touch inputs inputted by the first hand 10a and the second hand 10b. A function corresponding to each of the points can be mapped to the display device. In the present invention, assume that the display device performs a new function by combining a function corresponding to a touch input inputted by the first hand 10a and a function corresponding to a touch input inputted by the second hand 10b with each other.

And, in the present invention, it may be able to assume that a first touch input is performed by the first hand 10a and a second touch input is performed by the second hand 10b. In this case, assume that at least a part of time at which the first touch input is sensed by the sensing unit and time at which the second touch input is sensed by the sensing unit is overlapped with each other.

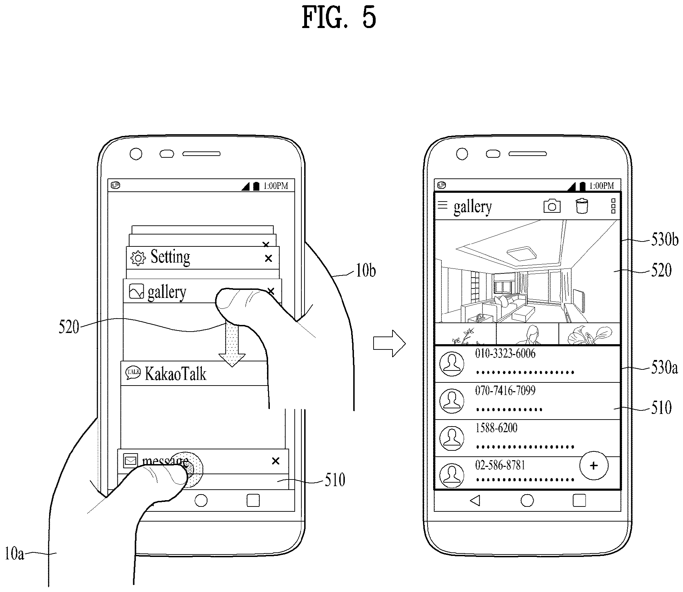

In the following, a user interface configured to provide a function, which is provided based on a combination of touch inputs according to the example of the multi touch input shown in FIG. 4, is explained with reference to embodiments of FIGS. 5 to 14.

FIG. 5 is a diagram for an example of a user interface controlled by a multi swipe touch sensed on a mobile terminal according to one embodiment of the present invention.

More specifically, FIG. 5 shows a method of providing a multitasking screen by a multi swipe touch in a state that a recently used list is outputted.

A display device can output a recently used list on a display according to a control command of a user. In this case, the recently used list can include at least one or more applications previously executed by a user in the display device.

As shown in a first drawing of FIG. 5, the display device can sense a first touch input inputted on a first application 510 and a second touch input inputted on a second application 520. For example, the first touch input is performed by the first hand 10a and the first touch input may correspond to a state of holding a touch. And, for example, the second touch input is performed by the second hand 10b and the second touch input may correspond to a swipe touch or a flicking touch in one direction. In the embodiment of FIG. 5, the second touch input is illustrated as a swipe touch in down direction, by which the present invention may be non-limited. And, in the embodiment of FIG. 5, the first and the second touch input can be sensed at the same time or can be sequentially sensed.

In this case, the display device determines the first application of multitasking by the first touch input and determines the second application of multitasking by the second touch input. And, as shown in a second drawing of FIG. 5, the display device can perform a multitasking function in response to the first touch input and the second touch input. More specifically, the display device can control the first application 510 to be outputted on a first area 530a and control the second application 520 to be outputted on a second area 530b.

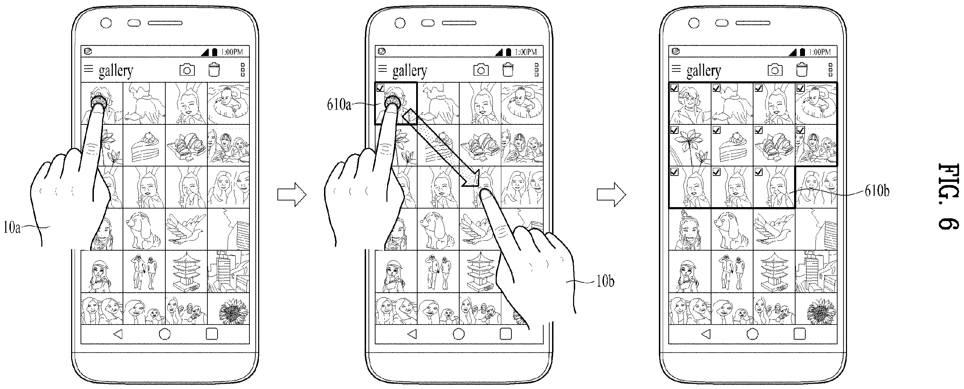

FIG. 6 is a diagram for a different example of a user interface controlled by a multi swipe touch sensed on a mobile terminal according to one embodiment of the present invention.

More specifically, FIG. 6 shows a method of selecting a plurality of images by a multi touch on a gallery application. For example, the gallery application can include an image capture by a camera mounted on the display device, an image received through a wireless communication unit, a screenshot image via a website, and the like.

As shown in a first drawing of FIG. 6, the display device can output a thumbnail list of a plurality of images in a state that the gallery application is executed. And, the display device can sense a first touch input inputted on a first thumbnail 610a among the thumbnail list. In this case, the first touch input is performed by the first hand 10a and the first touch input may correspond to a state of holding a touch. And, the display device can select the first thumbnail 610a in response to the first touch input. And, the display device may highlight the selected first thumbnail 610a. In this case, the first thumbnail 610a may correspond to a firstly selected thumbnail.

As shown in a second drawing of FIG. 6, the display device can sense a second touch input inputted on the thumbnail list in a state that the first touch input is maintained. In this case, the second touch input is performed by the second hand 10b and the second touch input may correspond to a drag (swipe) touch in one direction. And, the display device can select a second thumbnail 610b in response to the second touch input. In this case, the second thumbnail 610b may correspond to a lastly selected thumbnail.

Referring to a third drawing of FIG. 6, the display device can select thumbnails ranging from the first thumbnail 610a to the second thumbnail 610b included in the thumbnail list in response to the first touch input and the second touch input. And, the display device can highlight the thumbnails ranging from the first thumbnail 610a to the second thumbnail 610b to indicate that the thumbnails are selected.

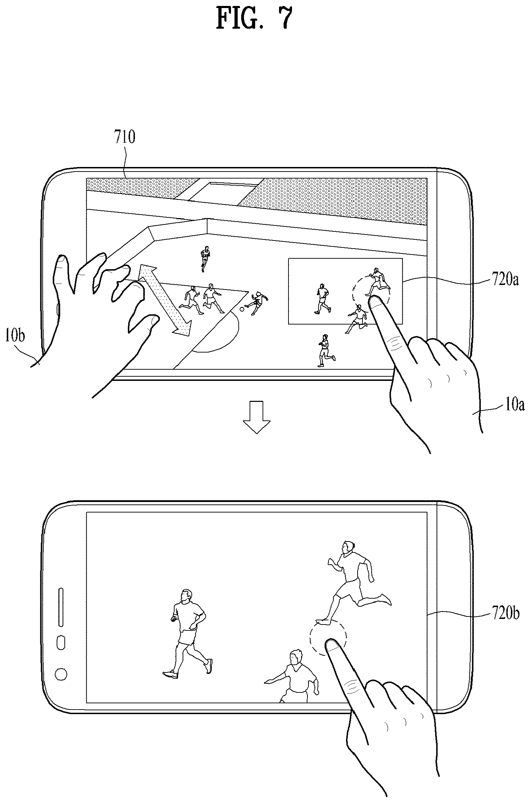

FIG. 7 is a diagram for an example of a user interface controlled by air zoom sensed on a mobile terminal according to one embodiment of the present invention.

More specifically, FIG. 7 shows a method of magnifying or reducing a part of an image in a state that the image is outputted.

Referring to a first drawing of FIG. 7, the display device can sense a first touch input in a state that an image 710 is outputted. In this case, the first touch input may correspond to a hovering touch touched by the first hand 10a selecting a specific area 720a of the image. In this case, the specific area 720a may correspond to a rectangular area located within a predetermined distance rage from a point corresponding to the first touch input.

And, the display device can sense a second touch input inputted on the image 710 in a state that the first touch input is sensed. In this case, the second touch input may correspond to a pinch-in touch touched by the second hand 10b on an unspecified area of the image 710. And, the second touch input may correspond to an input for magnifying an image.

Referring to a second drawing of FIG. 7, the display device can control a magnified image 720b of a specific area to be outputted on the display unit in response to the first touch input and the second touch input.

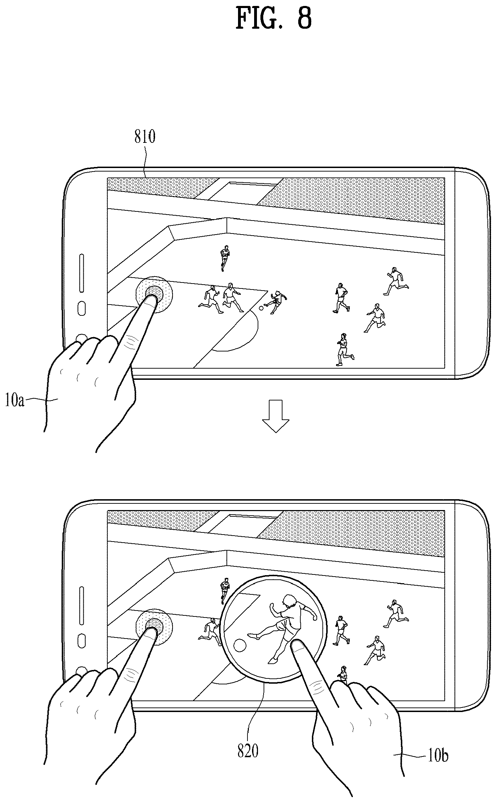

FIG. 8 is a diagram for an example of a user interface controlled by an air view sensed on a mobile terminal according to one embodiment of the present invention.

More specifically, FIG. 8 shows a method of magnifying or reducing a part of an image in a state that the image is outputted. Unlike the aforementioned embodiment of FIG. 7, an embodiment of FIG. 8 shows a method of outputting a magnified area on the image in a pop-up form.

Referring to a first drawing of FIG. 8, the display device can sense a first touch input in a state that an image 810 is outputted. In this case, the first touch input may correspond to a state of holding a touch touched by the first hand 10a on an unspecific area of the image.

Referring to a second drawing of FIG. 8, the display device can sense a second touch input for selecting a specific area 820 on the image 810 in a state that the first touch input is maintained. In this case, the second touch input may correspond to a hovering touch touched by the second touch input for selecting the specific area 820 of the image. In this case, the specific area 820 may correspond to a circular area located within a predetermined distance range from a point corresponding to the second touch input.

Subsequently, the display device can control a pop-up indicating the specific area 820 to be outputted in a manner of being overlaid in a state that the image 810 is outputted.

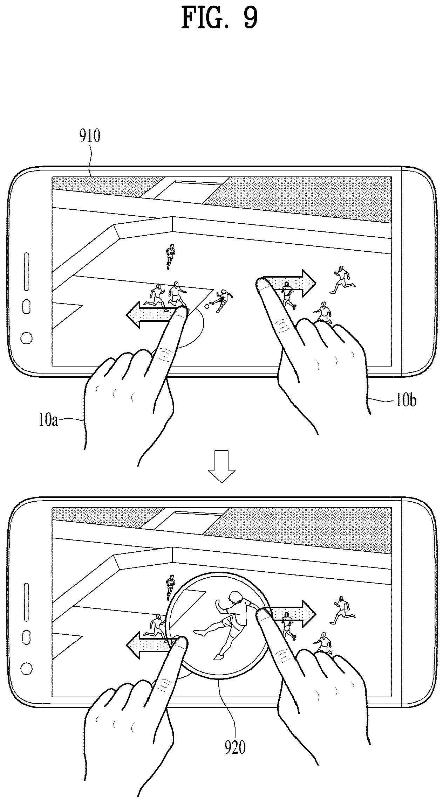

FIG. 9 is a diagram for an example of a user interface controlled by a cross pinch sensed on a mobile terminal according to one embodiment of the present invention.

More specifically, FIG. 9 shows a method of magnifying or reducing a part of an image in a state that the image is outputted.

Referring to a first drawing of FIG. 9, the display device can sense a first touch input and a second touch input at the same time in a state an image 910 is outputted. In this case, the first touch input may correspond to a drag touch touched by the first hand 10a and the second touch input may correspond to a drag touch touched by the second hand 10b. And, a pinch-out touch can be formed by the first touch input and the second touch input.

As shown in a second drawing of FIG. 9, the display device can output a magnified pop-up 920 on the image 910. In this case, the magnified pop-up 920 can be outputted between a trajectory corresponding to the first touch input and a trajectory corresponding to the second touch input. In particular, the magnified pop-up 920 may correspond to a magnified image of an area located between the first touch input and the second touch input.

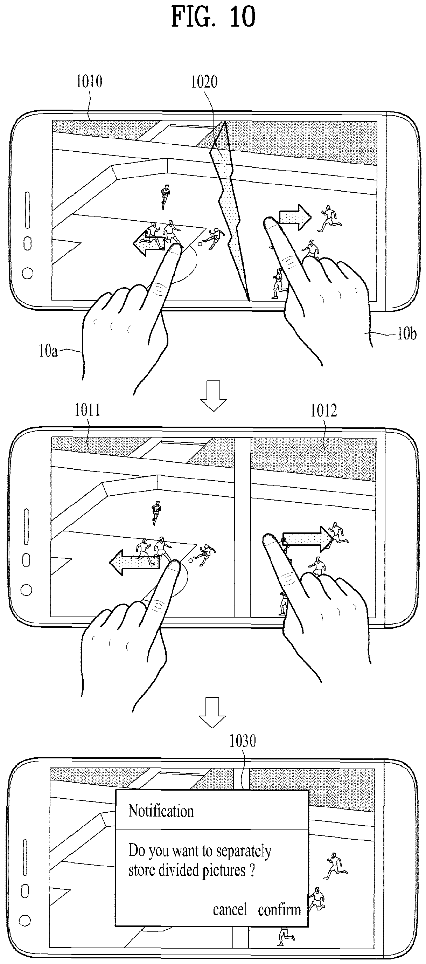

FIG. 10 is a diagram for a different example of a user interface controlled by a cross pinch sensed on a mobile terminal according to one embodiment of the present invention.

More specifically, FIG. 10 shows a method of dividing an image in a state that the image is outputted.

Referring to a first drawing of FIG. 10, the display device can sense a first touch input and a second touch input at the same time in a state an image 1010 is outputted. In this case, the first touch input may correspond to a drag touch touched by the first hand 10a and the second touch input may correspond to a drag touch touched by the second hand 10b. And, a pinch-out touch can be formed by the first touch input and the second touch input.

If lengths of the first touch input and the second touch input are within a predetermined length range, as shown in a first drawing of FIG. 10, the display device can control a division indicator 1020 to be outputted. In this case, the division indicator 1020 may correspond to an indicator indicating that an image is to be divided into a first image and a second image.

If at least one of the length of the first touch input and the length of the second touch input does not belong to the predetermined length range, as shown in a second drawing of FIG. 10, the display device can control an image to be outputted in a manner of being divided into a first image 1011 and a second image 1012. The first image 1011 and the second image 1012 correspond to images separated from the image 1010 based on a position of the division indicator 1020.

Referring to a third drawing of FIG. 10, if the first touch input and the second touch input are released, the display device outputs a pop-up 1030 to determine whether to store the first image 1011 and the second image 1012.

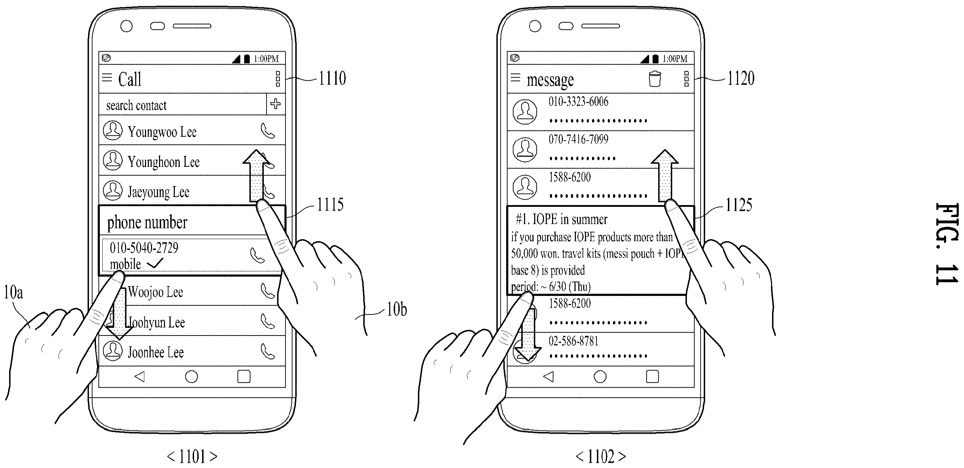

FIG. 11 is a diagram for a further different example of a user interface controlled by a cross pinch sensed on a mobile terminal according to one embodiment of the present invention.

More specifically, FIG. 11 shows a method of outputting lower depth in an application on which a list is outputted.

As an example, referring to <1101>, the display device can output an execution screen of a contacts application on a display unit. The execution screen of the contacts application can include a list of a plurality of contacts. In this case, a user may intend to simply check detail information on a single contact among a plurality of the contacts without switching to a full screen. In general, if an input signal for a single contact is sensed among a plurality of the contacts, a mobile terminal outputs a detail screen for the single contact on the full screen.

According to the present invention, it is able to sense a first touch input and a second touch input inputted on a single contact at the same time among a plurality of contacts 1110. In this case, the first touch input may correspond to a drag touch in down direction touched by the first hand 10a. And, the second touch input may correspond to a drag touch in up direction touched by the second hand 10b. And, a pinch-out touch can be formed by the first touch input and the second touch input.

The display device can output contact information 1115 corresponding to lower depth of a single contact in a pop-up form in response to the first touch input and the second touch input. The contact information 1115 is outputted while the first touch input and the second touch input are maintained. And, if at least one of the first touch input and the second touch input is released, the contact information 1115 may be disappeared.

As a different example, referring to <1102>, the display device can output an execution screen of a message application on the display unit. The execution screen of the message application can include a list of messages sent from a plurality of senders. In this case, a user may intend to simply check a message recently received from a specific sender among a plurality of the messages without switching to a full screen.

According to the present invention, it is able to simultaneously sense a first touch input and a second touch input inputted on a single sender among a list 1120 of a plurality of messages. In this case, explanation on the first touch input and the second touch input is identical to what is mentioned earlier in <1101>, the explanation is omitted at this time. The display device can output a recent message 1125 corresponding to lower depth of a single sender in a pop-up form in response to the first touch input and the second touch input. The recent message 1125 is outputted while the first touch input and the second touch input are maintained. And, if at least one of the first touch input and the second touch input is released, the recent message 1125 may be disappeared. In this case, the display device may be able to output the list of a plurality of the messages on the display unit again.

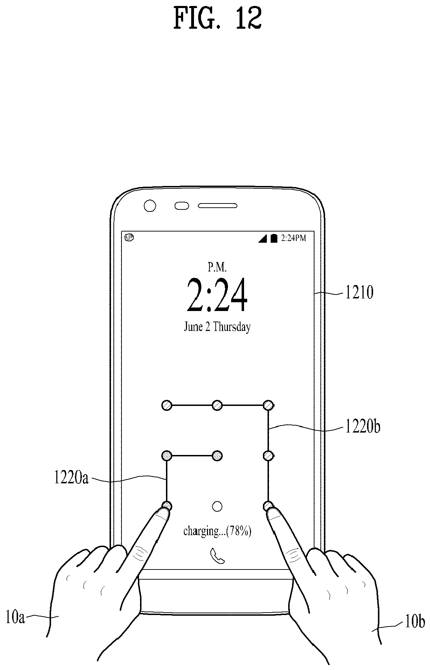

FIG. 12 is a diagram for a further different example of a user interface controlled by a cross pinch sensed on a mobile terminal according to one embodiment of the present invention.

More specifically, FIG. 12 shows a method of unlocking a lock screen via a cross pinch in a state that the lock screen is outputted on the display device.

If the lock screen for security is unlocked via various methods, the display device can provide contents. The lock screen can be unlocked via various schemes including a PIN code input, a pattern input, a fingerprint input, an iris input, and the like. In the present embodiment, an example for a case of unlocking the lock screen using a pattern input is described.

Referring to FIG. 12, the display device can output a pattern code region corresponding to an unlock interface on a lock screen 1210. For example, a pattern code can include 9 points, by which the present invention may be non-limited.

The display device can sense a first touch input and a second touch input inputted on the pattern code region. In this case, the first touch input and the second touch input can be sensed at the same time or can be sensed sequentially. The first touch input corresponds to a drag touch touched by the first hand 10a and forms a first pattern 1220a. The second touch input corresponds to a drag touch touched by the second hand 10b and forms a second pattern 1220b. And, the first pattern 1220a and the second pattern 1220b may form a pattern input.

If the pattern input formed by the first touch input and the second touch input corresponds to a predetermined pattern, the display device unlocks the display device and may be then able to provide contents.

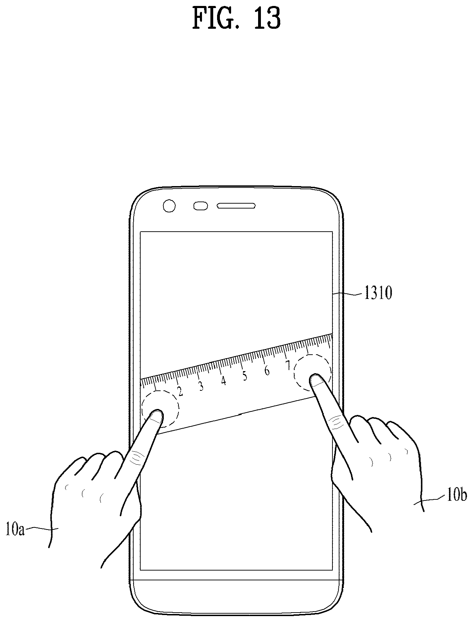

FIG. 13 is a diagram for an example of a user interface controlled by a cross hover sensed on a mobile terminal according to one embodiment of the present invention.

More specifically, FIG. 13 shows a method of outputting a tool by a plurality of proximity touches touched on a display unit.

The display device can sense a first touch input and a second touch input on the display unit. In this case, the first touch input corresponds to a proximity touch touched by the first hand 10a and the second touch input may correspond to a proximity touch touched by the second hand 10b. The first touch input and the second touch input can be sensed at the same time.

If first touch input and the second touch input are sensed, the display device can output a ruler tool 1310 on the display unit. In this case, the ruler tool 1310 can be outputted at a positon corresponding to a point at which the first touch input and the second touch input are sensed. For example, the ruler tool 1310 can be outputted at an area of a straight line ranging from a point corresponding to the first touch input to a point corresponding to the second touch input. And, the ruler tool 1310 is outputted while the first touch input and the second touch input are maintained. And, if at least one of the first touch input and the second touch input is released, the ruler tool 1310 may be disappeared.

In the embodiment of FIG. 13, although the ruler tool is described as an example, it is apparent that it is able to output various tools capable of drawing a figure using a cross hover, and the like.

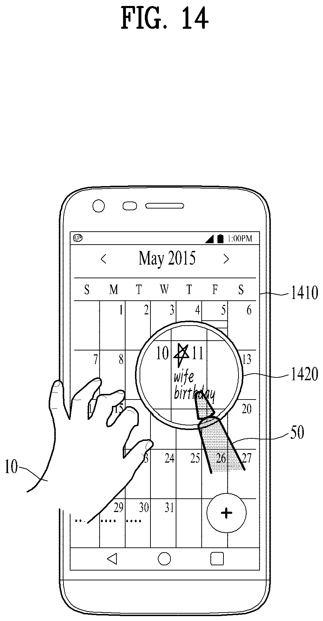

FIG. 14 is a diagram for an example of a user interface controlled by pinch and drawing sensed on a mobile terminal according to one embodiment of the present invention.

More specifically, FIG. 14 shows a method of inputting a schedule via a pinch input and a drawing input on a calendar application. And, in an embodiment of FIG. 14, a stylus pen 50 and the display device are in a paired state and data can be transceived between the stylus pen and the display device.

The display device can output an execution screen of a calendar application 1410. In this case, a user may intend to add a schedule to the calendar application 1410. However, since a size of a day area is too small, it may be difficult for the user to directly add a schedule to the execution screen of the calendar application 1410.

In this case, the display device can sense a first touch input inputted on an area of a specific date. In this case, the first touch input may correspond to a proximity touch touched by the stylus pen 50. At the same time, the display device can sense a second touch input inputted on the display unit. In this case, the second touch input may correspond to a pinch-out touch touched by the first hand or the second hand 10.

In this case, the display device can output a magnified pop-up 1420 of the specific date corresponding to the first touch input in response to the first touch input and the second touch input. By doing so, a user can input a schedule using the stylus pen 50 according to a third touch input on the magnified pop-up 1420.

If the second touch input is released, the display device is able to get rid of the magnified pop-up 1420. When the magnified pop-up 1420 is removed, the display device can output the execution screen of the calendar application again.

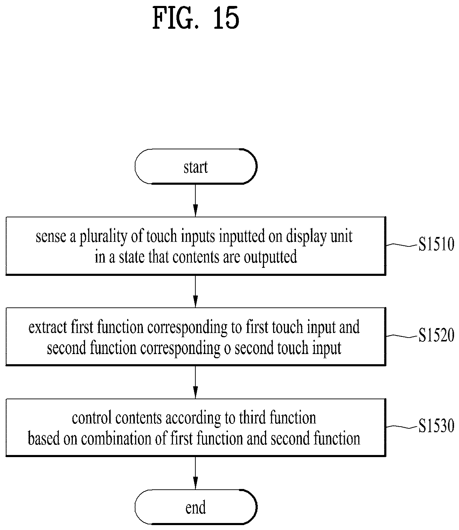

FIG. 15 is a flowchart for a method of controlling a display device according to one embodiment of the present invention.

First of all, the display device can sense a plurality of touch inputs inputted on the display unit [S1510]. For example, a plurality of the touch inputs can include a first touch input and a second touch input. In this case, the first touch input is performed by a first hand and the second touch input can be performed by a second hand. And, a plurality of the touch inputs can be sensed at the same time or can be sensed sequentially.

Subsequently, the display device can extract a first function corresponding to the first touch input and a second function corresponding to the second touch input [S1520]. For example, if the first touch input corresponds to a single touch or hovering, the first function may correspond to a function of selecting an area corresponding to the first touch input. And, for example, if the second touch input corresponds to a pinch-out touch, the second function may correspond to a function of magnifying an area corresponding to the second touch input.

The display device can output a third function corresponding to a combination of the first function and the second function on the display unit [S1530]. For example, as mentioned earlier in FIG. 7, if the first touch input corresponds to hovering and the second touch input corresponds to a pinch-out touch, the display device can output an area corresponding to the first touch input on the display unit by magnifying the area among contents outputted.

According to at least one of the embodiments of the present invention, when an identical multi touch input is inputted by a multi touch touched by one hand and a multi touch touched by both hands, it is able to perform a different function.

According to at least one of the embodiments of the present invention, it is able to control a display device in more various ways using a multi touch touched by both hands.

According to at least one of the embodiments of the present invention, when a multi touch touched by both hands is sensed, a display device can perform a new function corresponding to a combination of functions of each touch input.

Various embodiments may be implemented using a machine-readable medium having instructions stored thereon for execution by a processor to perform various methods presented herein. Examples of possible machine-readable mediums include HDD(Hard Disk Drive), SSD(Solid State Disk), SDD(Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal. The foregoing embodiments are merely exemplary and are not to be considered as limiting the present disclosure. The present teachings can be readily applied to other types of methods and apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments. As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims are therefore intended to be embraced by the appended claims.

## Claims

1. A display device (100), comprising:
a display unit (151);
a sensing unit (140); and
a controller (180), the controller (180) is configured to:
sense (S1510) a plurality of touch inputs inputted on the display unit (151) in a state that contents are outputted, wherein a plurality of the touch inputs comprise a first touch input and a second touch input,
extract (S1520) a first function corresponding to the first touch input and a second function corresponding to the second touch input,
control (S1530) the contents according to a third function based on a combination of the first function and the second function.

2. The display device (100) according to claim 1, wherein each of the first touch input and the second touch input corresponds to an input performed by a different hand.

3. The display device (100) according to claim 1, wherein a plurality of the touch inputs comprise a direct touch touched on the display unit (151) and a proximity touch vertically located within a predetermined distance range from the display unit (151).

4. The display device (100) according to claim 1, wherein at least a part of time at which the first touch input is sensed and a part of time at which the second touch input is sensed is overlapped with each other.

5. The display device (100) according to claim 1, wherein when a recently used list is outputted on the display unit (151), the controller (180) is further configured to sense the first touch input inputted on a first application and the second touch input inputted on a second application and output a multitasking screen containing a first area and a second area on the display unit (151) in response to the first touch input and the second touch input, wherein an execution screen of the first application is outputted on the first area of the multitasking screen, and wherein an execution screen of the second application is outputted on the second area of the multitasking screen.

6. The display device (100) according to claim 1, wherein when a plurality of thumbnail images are outputted on the display unit (151), the controller (180) is further configured to sense the first touch input inputted on a first thumbnail and the second touch input inputted on a second thumbnail and select a plurality of thumbnails between the first thumbnail and the second thumbnail in response to the first touch input and the second touch input.

7. The display device (100) according to claim 1, wherein when an image is outputted on the display unit (151), the controller (180) is further configured to sense the first touch input for selecting a first area contained in the image and the second touch input for selecting an area except the first area from the image and output a magnified image of the first area on the display unit (151) in response to the first touch input and the second touch input.

8. The display device (100) according to claim 7, wherein the first area correspond to an area located within a predetermined distance range from a point corresponding to the first touch input or to the second touch input.

9. The display device (100) according to claim 7, wherein the second touch input is sensed to select a specific area (820) on the image (810) in a state that the first touch input is maintained.

10. The display device (100) according to claim 7, wherein the magnified image corresponds to a image of an area located between the first touch input and the second touch input.

11. The display device (100) according to claim 1, wherein when an image is outputted on the display unit (151), the controller (180) is further configured to sense the first touch input inputted on a first area contained in the image and the second touch input inputted on a second area contained in the image, wherein the first touch input and the second touch input correspond to drag touch inputs, and divide the image into a first image and a second image in response to the first touch input and the second touch input.

12. The display device (100) according to claim 1, wherein when a plurality of items are outputted on the display unit (151), the controller (180) is further configured to sense a first touch input and a second touch input inputted on a first item among a plurality of the items and output a lower item of the first item in a pop-up form in response to the first touch input and the second touch input.

13. The display device (100) according to claim 12, wherein the plurality of items is a plurality of contacts and wherein the lower item is a contact information of the first item.

14. The display device (100) according to claim 1, wherein the controller is further configured to display a pattern code region corresponding to an unlock interface on a lock screen (1210),
wherein the first touch input forms a first pattern (1220a), the second touch input forms a second pattern (1220b) and wherein if a pattern input formed by the first touch input and the second touch input corresponds to a predetermined pattern, the controller may be configured to unlock the display device (100).

15. A method of controlling a display device (100), comprising the steps of:
sensing a plurality of touch inputs in a state that contents are outputted on a display unit (151), wherein a plurality of the touch inputs comprise a first touch input and a second touch input;
extracting a first function corresponding to the first touch input and a second function corresponding to the second touch input; and
controlling the contents according to a third function based on a combination of the first function and the second function.
